# EUROPEAN PATENT SPECIFICATION

(11) **EP 0 589 728 B1**
(45) Date of publication and mention of the grant of the patent: **27.12.1995**
(21) Application number: 93307622.6
(22) Date of filing: 27.09.1993
(51) Int. Cl.: B64C 21/00

(54) **Boundary layer control systems**
Steueranlagen der Grenzschicht
Systèmes de contrôle de la couche limite

(30) Priority: 25.09.1992 GB 9220250
(43) Date of publication of application: 30.03.1994
(73) Proprietor: BRITISH AEROSPACE PUBLIC LIMITED COMPANY, Farnborough, Hants. GU14 6YU (GB)
(72) Inventor: Majdalawi, Fouad, Filton, Bristol, BS99 7AR (GB); Nayfeh, Ali Hasan, Blacksburg, Virginia 24060 (US)

(56) References cited:
- US-A- 2 943 828
- US-A- 4 932 610
- JOURNAL OF FLUID MECHANICS vol. 118 , 1982 , GREAT BRITAIN pages 187 - 200 LIEPMANN ET AL. 'CONTROL OF LAMINAR-INSTABILITY WAVES USING A NEW TECHNIQUE'

## Description

This invention relates to boundary layer control systems. More particularly it relates to means for controlling the laminarity of the flow over a surface.

One known system for controlling the transition of laminar/turbulent flow at a surface is described in US patent 4,786.020 and comprises thin metallic ribbons, disposed adjacent the surface and extending substantially transverse of the flow of the airstream, which can be vibrated by periodic heating. The patented system thus achieves boundary layer control by controlling the growth or decay of disturbances by amplitude and phase shifting of the disturbances induced by vibration.

US Patent 4,932.610 teaches the active control of boundary layer transition and turbulence which comprises heating elements associated with a surface such as an aerofoil to trigger boundary layer transition and audio speakers to provide acoustic suppression of the boundary layer. The trigger and suppression control are activated by a feedback amplifier which reads boundary layer flow conditions using an anenometer probe. This active control of the boundary layer permits delay of flow separation and a reduction in skin friction drag as compared to natural flow conditions.

According to the present invention there is provided:-

A boundary layer control system comprising in combination:-
a surface,
a plurality of heater elements lying substantially flush with said surface for heating the boundary layer,
a plurality of cooling elements lying substantially flush with said surface for cooling the boundary layer,
the arrangement being such that boundary layer flow passing over said heater elements is locally heated and thus destabilised and when passing over said cooling elements the heat flux is directed towards the surface,
whereby change in location of the transition region is effected.

One embodiment of the invention will now be described, by way of example only, and with reference to the following drawings in which:-
Figure 1 is a typical cross section through an aerofoil section incorporating the present invention.
Figure 2 is a part cross-section to a larger scale through an aerofoil section.

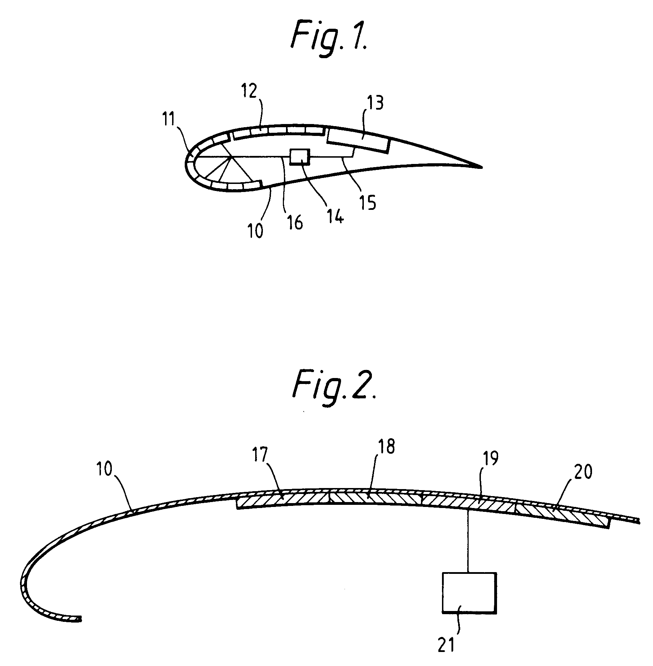

Referring to the drawings, Figure 1 illustrates a typical cross-section through a wing aerofoil 10, the aerofoil incorporating spanwise extending leading edge heater elements 11 and spanwise extending upper surface cooling elements 12 positioned adjacent to, but downstream of, the heating elements 11. In the preferred arrangement a transition detector 13 is mounted downstream of the cooling elements and a feed back amplifier 14 positioned within the wing structure with interconnecting transmission lines 15 and 16 joining the transition detector and the leading edge heating elements.

In figure 2, a partial cross section, just a series of cooling elements 17, 18, 19, 20 are shown. At least one of the elements 19 is shown connected to a power supply 21 by which means this particular element 19 can be used as a heat sink to extract heat energy from the flow.

By including cooled elements, the surface cooling may be forced or enhanced. Variable cooling rates may be achieved by the use of variable materials for the cooling elements, thus providing variable thermal conductivity.

In practice, the system may be used either to increase the laminarity of the flow (either the extent of transition from laminar to turbulent flow or the turbulence level in the boundary layer ie: Suppress the disturbance growth in the boundary layer) or trigger transition to turbulent flow.

The system operates such that the transition detector 13 measures some boundary layer flow parameters (e.g. fluctuating velocity measurements). By means of the feed back amplifier 14, the heater elements can be activated (both in position and the degree of heating).

In the case of air flow, the boundary layer flows over elements 11 and is locally heated. However, where the boundary layer flows over the cooling elements 12, which is relatively cooler than element 11, the direction of the heat flux is directed towards the surface.

Overall, this would achieve transition delay similar to the well documented process of overall surface cooling (as in US-A-2 943 828), yet this method may require less energy to achieve the objective of transition (from laminar to turbulent) delay.

Although this embodiment is particularly described in the context of aircraft it is equally relevant to and benefical for marine applications. For example the delay of transition or the promotion of laminar flow can be achieved by slightly modifying the said system such that the location of the heater/cooling elements is interchanged.

## Claims

1. A boundary layer control system comprising in combination:-
a surface (10),
a plurality of heater elements (11) lying substantially flush with said surface for heating the boundary layer,
a plurality of cooling elements (12) lying substantially flush with said surface for cooling the boundary layer,
the arrangement being such that boundary layer flow passing over said heater elements is locally heated and thus destabilised and when passing over said cooling elements the heat flux is directed towards the surface,
whereby change in location of the transition region is effected.

2. A boundary layer control system as in claim 1 in which said plurality of cooling elements (12, 17, 18, 19, 20) lie downstream of said heater elements (11), whereby transition delay is effected.

3. A boundary layer control system according to Claim 1 or 2 in which at least some of said cooling elements (12, 17, 18, 19, 20) include means for varying the rate of cooling in order to account for variable boundary layer temperature over said surface.

4. A boundary layer control system according to Claim 1,2 or 3 in which said plurality of cooling elements (12, 17, 18, 19, 20) are of selectively variable materials and thus variable thermal conductivity.

5. A boundary layer control system according to any of Claims 1 to 4 in which at least some of said plurality of cooling elements (12, 17, 18, 19, 20) include forced cooling means.

6. A boundary layer control system according to Claim 5 in which one or more of said forced cooling elements (12, 17, 18, 19, 20) are connected to a power supply (21) and used as a heat sink to extract heat energy from the flow.

7. A boundary layer control system according to any preceding Claim in which said system further includes a transition detector (13) for measuring boundary layer flow parameters such as fluctuating velocity measurements.

8. A boundary layer control system according to any preceding Claim in which said system further includes a feed back amplifier (14) by which means the activation of said heater elements (11) can be continuously varied if need be both in position and the degree of heating.

9. A boundary layer control system according to any preceding Claim in which said heating elements (11) and said cooling elements (12, 17, 18, 19, 20) are arranged across the surface (10) in both spanwise and chordwise senses and in a pre-defined pattern in accordance with fluid flow requirements.

## Patentansprüche

1. Grenzschicht-Steuersystem, welches in Kombination folgende Merkmale aufweist:
- eine Oberfläche (10),
- mehrere Heizelemente (11), die im wesentlichen mit der Oberfläche fluchten, um die Grenzschicht zu erwärmen,
- mehrere Kühlelemente (12), die im wesentlichen mit dieser Oberfläche fluchten, um die Grenzschicht abzukühlen,
- wobei die Anordnung derart getroffen ist, daß die Grenzschichtströmung, die über die Heizelemente fließt, örtlich erhitzt und dadurch destabilisiert wird, während die Wärmeströmung beim Überstreichen der Kühlelemente auf diese Oberfläche hin gerichtet wird,
- wodurch eine Änderung der Lage des Übergangsbereichs bewirkt wird.

2. Grenzschicht-Steuersystem nach Anspruch 1, bei welchem die Kühlelemente (12, 17, 18, 19, 20) stromab der Heizelemente (11) liegen, wodurch eine Übergangsverzögerung bewirkt wird.

3. Grenzschicht-Steuersystem nach den Ansprüchen 1 oder 2, bei welchem wenigstens ein Teil der Kühlelemente (12, 17, 18, 19, 20) Mittel aufweist, um die Abkühlrate zu verändern, damit die sich ändernde Grenzschichttemperatur über der Oberfläche berücksichtigt wird.

4. Grenzschicht-Steuersystem nach den Ansprüchen 1, 2 oder 3, bei welchem die Kühlelemente (12, 17, 18, 19, 20) aus selektiv verschiedenen Materialien bestehen und demgemäß eine variable thermische Leitfähigkeit aufweisen.

5. Grenzschicht-Steuersystem nach einem der Ansprüche 1 bis 4, bei welchem wenigstens ein Teil der Kühlelemente (12, 17, 18, 19, 20) Zwangskühlmittel aufweist.

6. Grenzschicht-Steuersystem nach Anspruch 5, bei welchem eines oder mehrere der zwangsgekühlten Elemente (12, 17, 18, 19, 20) an eine Kraftquelle (21) angeschlossen sind und als Wärmesenke benutzt werden, um Wärmeenergie aus der Strömung abzuziehen.

7. Grenzschicht-Steuersystem nach einem der vorhergehenden Ansprüche, bei welchem das System außerdem einen Übergangsdetektor (13) aufweist, um die Grenzschicht-Strömungsparameter zu messen, beispielsweise die Fluktationsgeschwindigkeit.

8. Grenzschicht-Steuersystem nach einem der vorhergehenden Ansprüche, bei welchem außerdem ein Rückkopplungsverstärker (14) vorgesehen ist, durch den die Aktivierung der Heizelemente (11) kontinuierlich geändert werden kann, wenn es nötig ist, sowohl die Lage als auch das Ausmaß der Erwärmung zu verändern.

9. Grenzschicht-Steuersystem nach einem der vorhergehenden Ansprüche, bei welchem die Heizelemente (11) und die Kühlelemente (12, 17, 18, 19, 20) über der Oberfläche (10) sowohl in Spannrichtung als auch in Sehnenrichtung in einem vorbestimmten Muster gemäß den Strömungserfordernissen angeordnet sind.

## Revendications

1. Système de régulation de couche limite comprenant conjointement :
une surface (10),
une pluralité d'éléments de chauffage (11) qui se trouvent sensiblement en alignement avec ladite surface pour chauffer la couche limite,
une pluralité d'éléments de refroidissement (12) qui se trouvent sensiblement en alignement avec ladite surface pour refroidir la couche limite,
la disposition étant telle que le courant de couche limite qui passe sur lesdits éléments de chauffage est localement chauffé et ainsi déstabilisé et qu'en passant sur lesdits éléments de refroidissement, le flux de chaleur est dirigé vers la surface,
grâce à quoi la modification de la position de la zone de transition est effectuée.

2. Système de régulation de couche limite selon la revendication 1, dans lequel ladite pluralité d'éléments de refroidissement (12, 17, 18, 19, 20) se trouvent en aval desdits éléments de chauffage (11), grâce à qui le retard de transition est effectué.

3. Système de régulation de couche limite selon la revendication 1 ou 2, dans lequel au moins quelques-uns desdits éléments de refroidissement (12, 17, 18, 19, 20) comprennent un moyen pour faire varier le niveau de refroidissement afin de tenir compte de la température variable de la couche limite sur ladite surface.

4. Système de régulation de couche limite selon la revendication 1, 2 ou 3, dans lequel ladite pluralité d'éléments de refroidissement (12, 17, 18, 19, 20) sont réalisés de manière sélective dans des matières diverses et ont ainsi une conductivité thermique variable.

5. Système de régulation de couche limite selon l'une quelconque des revendications 1 à 4, dans lequel au moins quelques-uns parmi ladite pluralité d'éléments de refroidissement (12, 17, 18, 19, 20) comprennent un moyen de refroidissement forcé.

6. Système de régulation de couche limite selon la revendication 5, dans lequel un ou plusieurs desdits éléments de refroidissement forcé (12, 17, 18, 19, 20) sont reliés à une source de courant (21) et utilisés en tant que dissipateur de chaleur pour extraire l'énergie calorifique du courant.

7. Système de régulation de couche limite selon l'une quelconque des revendications précédentes, dans lequel ledit système comprend en outre un détecteur de transition (13) pour mesurer les paramètres du courant de couche limite, par exemple des mesures de vitesse fluctuante.

8. Système de régulation de couche limite selon l'une quelconque des revendications précédentes, dans lequel ledit système comprend en outre un amplificateur à réaction (14) grâce auquel la mise en activité desdits éléments de chauffage (11) peut être modifiée en continu si cela est nécessaire à la fois en position et en niveau de chauffage.

9. Système de régulation de couche limite selon l'une quelconque des revendications précédentes, dans lequel lesdits éléments de chauffage (11) et lesdits éléments de refroidissement (12, 17, 18, 19, 20) sont disposés en travers de la surface (10) dans les directions de l'empattement et de la corde et ont un profil prédéterminé selon les besoins du courant de fluide.
